(19) Europäisches Patentamt
European Patent Office
Office européen des brevets

(11) **EP 1 967 544 B1**

(12) **EUROPEAN PATENT SPECIFICATION**

(45) Date of publication and mention
of the grant of the patent:
**17.11.2010 Bulletin 2010/46**

(51) Int Cl.:
*C08L 7/00* *(2006.01)*        *B60C 1/00* *(2006.01)*
*C08J 3/22* *(2006.01)*        *C08K 3/36* *(2006.01)*
*C08K 5/00* *(2006.01)*        *C08L 15/00* *(2006.01)*

(21) Application number: **06834213.8**

(22) Date of filing: **07.12.2006**

(86) International application number:
**PCT/JP2006/324458**

(87) International publication number:
**WO 2007/074617 (05.07.2007 Gazette 2007/27)**

(54) **RUBBER COMPOSITION FOR SIDEWALL AND PROCESS FOR PRODUCING THE SAME**

KAUTSCHUKZUSAMMENSETZUNG FÜR SEITENWAND UND HERSTELLUNGSVERFAHREN DAFÜR

COMPOSITION DE CAOUTCHOUC POUR FLANC DE PNEU ET PROCÉDÉ SERVANT À PRODUIRE CELLE-CI

(84) Designated Contracting States:
**DE FR**

(30) Priority: **27.12.2005 JP 2005374631**

(43) Date of publication of application:
**10.09.2008 Bulletin 2008/37**

(73) Proprietor: **SUMITOMO RUBBER INDUSTRIES, LTD.**
**Kobe-shi,**
**Hyogo 651-0072 (JP)**

(72) Inventors:
• **WADA, Takao**
**Kobe-shi, Hyogo 6510072 (JP)**
• **UCHIDA, Mamoru**
**Kobe-shi,**
**Hyogo 6510072 (JP)**

• **HIRAYAMA, Tomoaki**
**Kobe-shi,**
**Hyogo 6510072 (JP)**

(74) Representative: **Manitz, Finsterwald & Partner GbR**
**Martin-Greif-Strasse 1**
**80336 München (DE)**

(56) References cited:
EP-A- 1 577 341          WO-A1-2005/090463
JP-A- 01 135 850          JP-A- 09 087 427
JP-A- 62 004 541          JP-A- 2000 026 661
JP-A- 2003 063 206        JP-A- 2003 192 842
JP-A- 2003 525 333        JP-A- 2004 352 995
JP-A- 2005 263 956        JP-A- 2005 272 508
JP-A- 2006 070 093        JP-A- 2006 124 504

**Description**

TECHNICAL FIELD

The present invention relates to a rubber composition for sidewall and a preparation process thereof.

BACKGROUND ART

Conventionally, in a rubber composition for a sidewall of a tire, a butadiene rubber (BR) is compounded in order to improve flex crack growth property, in addition to a natural rubber (NR) showing excellent tear strength, and further, carbon black has been used so as to improve weather resistance and reinforcing property.

However, in recent years, environmental problems have been emphasized, and regulations on suppression of $CO_2$ emission are reinforced, and further, since petroleum resources are finite and supply thereof has been decreasing year by year, increase of petroleum prices in the future is predicted, thus, there is a limit in use of raw materials derived from petroleum resources such as BR and carbon black. Therefore, when assuming the case where petroleum oil is depleted in the future, it is necessary to use resources other than petroleum resources such as NR and silica. In such a case, however, there is a problem that the same or more performances such as flex crack resistance and reinforcing property cannot be obtained as compared with the case of conventionally used petroleum resources.

JP-A-2003-63206 discloses an ecological tire having no less properties as compared with conventional tires, in which a ratio of resources other than petroleum resources is increased in a tire by using specific resources other than petroleum resources, but the ecological tire does not improve tear strength and flex crack growth resistance with favorable balance.

European patent application 1 577 341 A1 discloses a rubber composition for a tire tread comprising 5 to 150 parts by weight of silica based on 100 parts by weight of a rubber component containing 5 to 100 % of an epoxidized natural rubber, and further comprising 1 to 50 phr of a vegetable oil, such as linseed oil, soya bean oil or the like.

DISCLOSURE OF INVENTION

An object of the present invention is to provide a rubber composition for a sidewall, in which an effect on environments can be taken into consideration, provision for the future decrease in petroleum supply can be satisfied, and further, tear strength, flex crack growth resistance and durability can be improved with favorable balance without increasing hardness, and a preparation process thereof.

The present invention relates to a rubber composition for a sidewall, comprising 15 to 60 parts by weight of silica and 2 to 20 parts by weight of a double bond-containing plasticizer derived from resources other than petroleum resources on the basis of 100 parts by weight of a rubber component containing 30 to 80 % by weight of a natural rubber and 20 to 70 % by weight of an epoxidized natural rubber having an epoxidization ratio between 5 % by mol and 60 % by mol, wherein the rubber composition further comprises 4 to 16 parts by weight of a silane compound satisfying the following general formula:

$$X_n\text{-Si-}Y_{4-n}$$

wherein X is an alkoxy group, Y is a phenyl group or an alkyl group, and n is an integer of 1 to 3 on the basis of 100 parts by weight of silica.

It is preferable that the double bond-containing plasticizer derived from resources other than petroleum resources has an iodine value of not less than 90.

It is preferable that a process for preparing the rubber composition for a sidewall comprises (1) a step of kneading a natural rubber, silica and a double bond-containing plasticizer derived from resources other than petroleum resources, and (2) a step of kneading the kneaded product discharged in the step (1) and an epoxidized natural rubber.

It is preferable that a process for preparing the rubber composition for a sidewall comprises (1) a step of preparing a masterbatch by kneading an epoxidized natural rubber and a double bond-containing plasticizer derived from resources other than petroleum resources, (2) a step of kneading a natural rubber and silica, and (3) a step of kneading the masterbatch discharged in the step (1) and the kneaded product discharged in the step (2).

The present invention also relates to a tire having a sidewall, which comprises the aforementioned rubber composition for a sidewall.

BEST MODE FOR CARRYING OUT THE INVENTION

The rubber composition for a sidewall of the present invention comprises a rubber component, silica, a double bond-containing plasticizer derived from resources other than petroleum resources and a specific silane compound.

The rubber component comprises a natural rubber (NR) and an epoxidized natural rubber (ENR).

As the NR, natural rubbers generally used in the rubber industries such as TSR20 and RSS#3 may be used.

The content of NR in the rubber component is not less than 30 % by weight, preferably not less than 40 % by weight. When the content of NR is less than 30 % by weight, crack growth resistance is deteriorated. The content of NR is not more than 80 % by weight, preferably not more than 70 % by weight. When the content of NR is more than 80 % by weight, crack growth resistance is deteriorated.

As the ENR, commercially available ENR may be used, or it is possible to epoxidize NR to be used. A process for epoxidizing ENR is not specifically limited and the epoxidizing can be carried out using processes such as a chlorohydrin method, a direct oxidation method, a hydrogen peroxide method, an alkylhydroperoxide method and a peracid method. An example of the peracid method is a process of reacting peracid such as peracetic acid or performic acid with NR.

The epoxidization ratio of ENR is not less than 5 % by mol, and preferably not less than 10 % by mol. When the epoxidization ratio of ENR is less than 5 % by mol, there is a tendency that effects resulting from compatibility between ENR and NR decrease. Further, the epoxidization ratio of ENR is not more than 60 % by mol, and preferably not more than 50 % by mol. When the epoxidization ratio of ENR is more than 60 % by mol, there is a tendency that rubber strength is not sufficient.

The content of ENR in the rubber component is not less than 20 % by weight, and preferably not less than 30 % by weight. When the content of ENR is less than 20 % by weight, crack growth resistance is lowered. The content of ENR is not more than 70 % by weight, and preferably not more than 60 % by weight. When the content of ENR is more than 70 % by weight, crack growth resistance is deteriorated.

The rubber component can contain, besides NR and ENR, rubbers such as styrene-butadiene rubber (SBR), butadiene rubber (BR), butyl rubber (IIR), halogenated butyl rubber (X-IIR), and a halogenated product of a copolymer of an isomonoolefin and p-alkylstyrene, and it is preferable that rubbers other than NR and ENR are not contained from the viewpoints that such rubbers are obtained from resources other than petroleum resources, an effect on environments can be taken into consideration, and also provision for the future decrease in the petroleum supply can be satisfied.

Silica is not particularly limited, and silica generally used in the rubber industries can be used.

The amount of silica is not less than 15 parts by weight on the basis of 100 parts by weight of the rubber component, preferably not less than 20 parts by weight. When the amount of silica is less than 15 parts by weight, rubber strength is lowered, cut is generated on a side of a tire by stimulus from the outside, and abrasion resistance is lowered. The amount of silica is not more than 60 parts by weight, preferably not more than 40 parts by weight. When the amount of silica is more than 60 parts by weight, hardness excessively increases, and crack growth resistance is deteriorated.

According to the present invention, a silane compound is compounded together with silica in the rubber composition for a sidewall of the present invention. Flex crack growth resistance and durability can be enhanced by containing the silane compound. The silane compound is a compound represented by the following formula:

$$X_n\text{-Si-}Y_{4-n}$$

wherein X is an alkoxy group, Y is a phenyl group or an alkyl group, and n is an integer of 1 to 3.

In the formula, X is an alkoxy group, preferably a methoxy group or an ethoxy group for the reason of easily reacting with silica, and more preferably an ethoxy group for the reason that a firing point is high.

Y is a phenyl group or an alkyl group, and when Y is a phenyl group, a firing point is as high as 111°C, thus, a phenyl group is preferable for the reason of being easily handled as compared with the case where when Y is an alkyl group, for instance, in the case of a methyl group ($-CH_3$), a firing point is as low as 8°C, for example, in methylethoxysilane; and for instance, in the case of a hexyl group ($-CH_2(CH_2)_4CH_3$), a firing point is also as low as 81°C, for example, in hexyltriethoxysilane.

n is an integer of 1 to 3. When n is 0, the silane compound does not have an alkoxy group, and there is a tendency that the silane compound cannot react with silica. When n is 4, there is a tendency that the silane compound is hardly compatible with a rubber. For the reason that reactivity with silica is high, n is preferably 3.

Examples of a silane compound satisfying the above-described formula are methyltrimethoxysilane (such as KBM13 available from Shin-Etsu Chemical Co., Ltd.), dimethyldimethoxysilane (such as KBM22 available from Shin-Etsu Chemical Co., Ltd.), phenyltrimethoxysilane (such as KBM103 available from Shin-Etsu Chemical Co., Ltd.), diphenyldimethoxysilane (such as KBM202SS available from Shin-Etsu Chemical Co., Ltd.), methyltriethoxysilane (such as KBE13 available from Shin-Etsu Chemical Co., Ltd.), dimethyldiethoxysilane (such as KBE22 available from Shin-Etsu Chemical Co., Ltd.), phenyltriethoxysilane (such as KBE103 available from Shin-Etsu Chemical Co., Ltd.), diphenyldiethoxysilane (such as KBE202 available from Shin-Etsu Chemical Co., Ltd.), hexyltrimethoxysilane (such as KBM3063 available from Shin-Etsu Chemical Co., Ltd.), hexyltriethoxysilane (such as KBE3063 available from Shin-Etsu Chemical Co., Ltd.), and decyltrimethoxysilane (such as KBM3103 and KBM3103C available from Shin-Etsu Chemical Co., Ltd.).

Among these, phenyltriethoxysilane is preferable for the reason that reactivity with silica is high and a firing point is high.

The content of the silane compound is not less than 4 parts by weight on the basis of 100 parts by weight of silica, more preferably not less than 8 parts by weight. When the content of the silane compound is less than 4 parts by weight, there is a tendency that sufficient flex crack growth resistance, tear strength and durability cannot be obtained. The content of the silane compound is not more than 16 parts by weight, more preferably not more than 12 parts by weight. When the content of the silane compound is more than 16 parts by weight, there is a tendency that tear strength is lowered.

In the present invention, a silane coupling agent can be used together with the silica and the silane compound. The silane coupling agent is not particularly limited, and silane coupling agents generally used in the rubber industries, for instance, sulfide silane coupling agents such as Si69 can be used.

A content of the silane coupling agent is preferably not less than 4 parts by weight on the basis of 100 parts by weight of silica, and more preferably not less than 8 parts by weight. When the content of the silane coupling agent is less than 4 parts by weight, there is a tendency that rubber strength is lowered. The content of the silane coupling agent is preferably not more than 20 parts by weight, and more preferably not more than 16 parts by weight. When the content of the silane coupling agent is more than 20 parts by weight, there is a tendency that rubber strength is lowered.

Examples of the double bond-containing plasticizer derived from resources other than petroleum resources are a linseed oil, a soybean oil, an oleyl alcohol, and a terpene resin. Among these, a linseed oil and/or a terpene resin is preferable from the viewpoint that crack growth resistance is excellent. Aromatic oils and paraffin oils are plasticizers derived from petroleum resources, which are, therefore, not suitable for the purpose of the instant application that an effect on environments can be taken into consideration.

An iodine value of the double bond-containing plasticizer derived from resources other than petroleum resources is preferably not less than 90, more preferably not less than 130, further more preferably not less than 190. When the iodine value of the double bond-containing plasticizer derived from resources other than petroleum resources is less than 90, there is a tendency that sufficient improvement effects of crack growth resistance cannot be obtained.

A content of the double bond-containing plasticizer derived from resources other than petroleum resources is not less than 2 parts by weight on the basis of 100 parts by weight of the rubber component, preferably not less than 4 parts by weight, more preferably not less than 5 parts by weight. When the content of the double bond-containing plasticizer derived from resources other than petroleum resources is less than 2 parts by weight, sufficient improvement effects of crack growth resistance due to compounding the double bond-containing plasticizer derived from resources other than petroleum resources cannot be obtained. The content of the double bond-containing plasticizer derived from resources other than petroleum resources is not more than 20 parts by weight, preferably not more than 15 parts by weight. When the content of the double bond-containing plasticizer derived from resources other than petroleum resources is more than 20 parts by weight, rubber strength is lowered.

Besides the above-described rubber component, silica, silane compound, silane coupling agent and double bond-containing plasticizer derived from resources other than petroleum resources, compounding agents conventionally compounded in the rubber industries such as a wax, various antioxidants, stearic acid, zinc oxide, sulfur and various vulcanization accelerators can be suitably compounded in the rubber composition for a sidewall of the present invention.

The rubber composition for a sidewall of the present invention is used particularly for a sidewall in a tire from the viewpoint that flex crack growth resistance is particularly improved.

A process for preparing the rubber composition for a sidewall in the first embodiment of the present invention (preparation process 1) comprises the following steps 1 and 2.

In the step 1, NR, silica and a double bond-containing plasticizer are kneaded.

In the step 2, the kneaded product discharged in the step (1) and ENR are kneaded.

In the step 1, compounding agents such as a silane compound, a silane coupling agent, a wax, various antioxidants, stearic acid and zinc oxide can be compounded.

In addition, an effect of improving flex crack growth resistance can be obtained by kneading ENR in the step 2, not in the step 1.

A process for preparing the rubber composition for a sidewall in the second embodiment of the present invention (preparation process 2) comprises the following steps 1, 2 and 3.

In the step 1, a masterbatch is prepared by mixing ENR and a double bond-containing plasticizer.

In the step 2, NR and silica are kneaded.

In the step 3, the masterbatch discharged in the step 1 and the kneaded product discharged in the step 2 are kneaded.

In the step 1, a content of the double bond-containing plasticizer when the masterbatch is prepared is preferably not less than 5 parts by weight on the basis of 100 parts by weight of ENR, more preferably not less than 10 parts by weight. When the content of the double bond-containing plasticizer is less than 5 parts by weight, there is a tendency that sufficient improvement effects of flex crack growth resistance due to compounding the double bond-containing plasticizer cannot be obtained. The content of double bond-containing plasticizer is preferably not more than 50 parts by weight, more preferably not more than 30 parts by weight. When the content of double bond-containing plasticizer is more than 50 parts by weight, a viscosity is excessively lowered, and there is a tendency that processability is significantly deteriorated.

In the step 2, compounding agents such as a silane compound, a silane coupling agent, a wax, various antioxidants, stearic acid and zinc oxide can be also compounded.

An effect of improving crack growth resistance can be obtained by preparing a masterbatch in the step 1 and kneading in the step 3.

The tire of the present invention is prepared by using the rubber composition for a sidewall of the present invention; the rubber composition for a sidewall of the present invention obtained by compounding the above compounding agents according to the necessity by the above-described preparation processes 1, 2 or general processes is extrusion-processed while being adjusted to a shape of a sidewall of a tire in an unvulcanization step, and molded on a tire molding machine to form an unvulcanized tire. This unvulcanized tire is heated and pressurized in a vulcanizer to obtain the tire of the present invention.

By using the rubber composition for a sidewall of the present invention, the tire of the present invention can be an ecological tire, in which an effect on environments can be taken into consideration, and provision for the future decrease in the petroleum supply can be satisfied.

EXAMPLES

The present invention is specifically explained based on Examples, but the present invention is not limited only thereto.

Various chemicals used in Examples and Comparative Examples are collectively explained in the following.

Natural rubber (NR): TSR20

Epoxidized natural rubber (ENR): ENR25 (epoxidization ratio: 25 % by mol) available from Kumpulan Guthrie Berhad Co.

Butadiene rubber (BR): BR150B available from Ube Industries, Ltd. Carbon black: DIABLACK E (N550) available from Mitsubishi Chemical Corporation

Silica: Ultrasil VN3 (Nitrogen adsorbing-specific surface area: 210 $m^2$/g) available from Degussa Co.

Silane coupling agent: Si69 (bis(3-triethoxysilylpropyl)tetrasulfide) available from Degussa Co.

Silane compound: KBE-103 (phenyltriethoxysilane) available from Shin-Etsu Chemical Co., Ltd.

Plasticizer derived from resources other than petroleum resources without containing double bond: epoxidized soy bean oil (iodine value: 3) available from KAO CORPORATION

Double bond-containing plasticizer 1 derived from resources other than petroleum resources: N/B linseed oil (iodine value: 190) available from Nisshin Oillio Group, Ltd.

Double bond-containing plasticizer 2 derived from resources other than petroleum resources: Oleyl#900 (oleyl alcohol, iodine value: 90) available from KYOWA TECNOS CO., LTD.

Double bond-containing plasticizer 3 derived from resources other than petroleum resources: Dimerone (terpene resin, iodine value: 207) available from Yasuhara Chemical Co., Ltd.

Aromatic oil: Process X-140 available from Japan Energy Corporation Petroleum resin: SP1068 resin available from Nippon Shokubai Co., Ltd.

Wax: OZOACE 0355 (paraffin wax) available from NIPPON SEIRO CO., LTD.

Masterbatch 1: containing 20 parts by weight of the plasticizer without containing double bond derived from resources other than petroleum resources on the basis of 100 parts by weight of ENR

Masterbatch 2: containing 20 parts by weight of the double bond-containing plasticizer 1 derived from resources other than petroleum resources on the basis of 100 parts by weight of ENR

Masterbatch 3: containing 20 parts by weight of the double bond-containing plasticizer 2 derived from resources other than petroleum resources on the basis of 100 parts by weight of ENR

Masterbatch 4: containing 20 parts by weight of the double bond-containing plasticizer 3 derived from resources other than petroleum resources on the basis of 100 parts by weight of ENR Antioxidant: ANTIGENE 6C (N-(1,3-dimethylbutyl)-N'-phenyl-p-phenylenediamide) available from Sumitomo Chemical Co., Ltd.

Stearic acid: Stearic acid "Tsubaki" available from NOF Corporation

Zinc oxide: available from Mitsui Mining & Smelting Co., Ltd.

Sulfur: available from Tsurumi Chemical Industry Co., Ltd. Vulcanization accelerator: NOCCELER CZ (N-cyclohexyl-2-benzothiazolylsulfeneamide) available from Ouchi Shinko Chemical Industrial Co., Ltd.

EXAMPLES 1 to 10 and COMPARATIVE EXAMPLES 1 to 11

According to compounding prescriptions in Table 1, chemicals other than masterbatches 1 to 4, sulfur and a vulcanization accelerator were charged so as to have a filling ratio of 58 %, and kneaded at 80 rpm until a temperature reached 140°C, using a 1.7L-banbury mixer manufactured by Kobe Steel., Ltd., to obtain a kneaded product 1 (step 1). Then, after discharging once, the kneaded product 1 obtained in the step 1 and the masterbatches 1 to 4 were charged so as to have a filling ratio of 58 %, and kneaded until a temperature reached 140°C, using a 1.7L-banbury mixer manufactured by Kobe Steel., Ltd., to obtain a kneaded product 2 (step 2). Then, the kneaded product 2 obtained in the step 2, sulfur and a vulcanization accelerator were kneaded for not less than 2 minutes under a temperature of not more than 100°C, using an 8-inch roll, to obtain an unvulcanized rubber composition (step 3). Further, the unvulcanized rubber composition obtained in the step 3 was press-vulcanized for 20 minutes under a temperature of 160°C, thereby, vulcanized rubber compositions of Examples 1 to 10 and Comparative Examples 1 to 11 were prepared. Regarding Comparative Example 9, ENR was not kneaded in the step 1, but was kneaded in the step 2.

(Hardness test)

According to JIS-K6253 "Hardness testing method for rubber, vulcanized or thermoplastic", hardness was measured with a spring-type A.

(Tear test)

According to JIS-K6252 "Rubber, vulcanized or thermoplastics -- Determination of tear strength", a tear strength (N/mm) was measured by using an angle-shaped test piece without notches.

(Flex crack growth resistance test)

According to JIS-K6260 "Testing of flex cracking and crack growth for rubber, vulcanized or thermoplastic (De Mattia)", a bending test was carried out on the vulcanized rubber composition sample, and the number of times of bending until 1 mm-long crack was generated in the rubber composition sample was measured under a temperature of 25°C. Herein, log (10,000 times/mm) indicates the number of times measured until the crack is generated as an index. It indicates that the larger the value is, the more excellent flex crack growth resistance is. 70 % and 110 % indicate elongation ratios for a length of the original vulcanized rubber composition sample.

(Durability)

The above described unvulcanized rubber composition was molded into a shape of a sidewall and laminated with other tire parts to form an unvulcanized tire, and the unvulcanized tire was press-vulcanized for 20 minutes under a temperature of 160°C to prepare a tire for testing (size: 195/65R15).

Using a drum (outer diameter: 1.7 m), a load was applied to the prepared tire under the conditions of a rim (15 x 6.00JJ), a load (6.96 kN), an inner pressure (150 kPa), and a speed (80 km/h), and the tire was continuously run until a crack was generated in a sidewall part to measure a distance (crack generation distance) at the time of generating a crack. Then, the crack generation distance of each composition was expressed as an index from the following calculation equation, assuming a durability index of Comparative Example 2 as 100.

$$\text{(Durability index)} = \text{(crack generation distance of each composition)} / \text{(crack generation distance of Comparative Example 2)} \times 100$$

Evaluation results of the above-described tests are shown in Table 1.

## TABLE 1

| Kinds of materials | Ex. | | | | | | | | | |
|---|---|---|---|---|---|---|---|---|---|---|
| | 1* | 2* | 3* | 4* | 5 | 6 | 7 | 8 | 9 | 10 |
| **Amounts (part by weight)** | | | | | | | | | | |
| **Step 1** | | | | | | | | | | |
| NR | 60 | 60 | 60 | 60 | 60 | 60 | 60 | 60 | 60 | 60 |
| ENR | 40 | 40 | - | - | 40 | 40 | - | - | 40 | - |
| BR | - | - | - | - | - | - | - | - | - | - |
| Carbon black | - | - | - | - | - | - | - | - | - | - |
| Silica | 28 | 28 | 28 | 28 | 28 | 28 | 28 | 28 | 28 | 28 |
| Silane coupling agent | 2.24 | 2.24 | 2.24 | 2.24 | 2.24 | 2.24 | 2.24 | 2.24 | 2.24 | 2.24 |
| Silane compound | - | - | - | - | 2.24 | 2.24 | 2.24 | 2.24 | 2.24 | 2.24 |
| Plasticizer without containing double bond | - | - | - | - | - | - | - | - | - | - |
| Double bond-containing plasticizer 1 | 8 | - | - | - | 8 | - | - | - | - | - |
| Double bond-containing plasticizer 2 | - | 8 | - | - | - | 8 | - | - | - | - |
| Double bond-containing plasticizer 3 | - | - | - | - | - | - | - | - | 8 | - |
| Aromatic oil | - | - | - | - | - | - | - | - | - | - |
| Petroleum resin | - | - | - | - | - | - | - | - | - | - |
| Wax | 1.2 | 1.2 | 1.2 | 1.2 | 1.2 | 1.2 | 1.2 | 1.2 | 1.2 | 1.2 |
| Antioxidant | 2.4 | 2.4 | 2.4 | 2.4 | 2.4 | 2.4 | 2.4 | 2.4 | 2.4 | 2.4 |
| Stearic acid | 2.5 | 2.5 | 2.5 | 2.5 | 2.5 | 2.5 | 2.5 | 2.5 | 2.5 | 2.5 |
| Zinc oxide | 3 | 3 | 3 | 3 | 3 | 3 | 3 | 3 | 3 | 3 |

\* not according to the invention

- continued -

EP 1 967 544 B1

| Kinds of materials | Ex. | | | | | | | | | |
|---|---|---|---|---|---|---|---|---|---|---|
| | 1* | 2* | 3* | 4* | 5 | 6 | 7 | 8 | 9 | 10 |
| **Amounts (part by weight)** | | | | | | | | | | |
| Step 2 | | | | | | | | | | |
| ENR | - | - | - | - | - | - | - | - | - | - |
| Masterbatch 1 | - | - | - | - | - | - | - | - | - | - |
| Masterbatch 2 | - | - | 48 | - | - | - | 48 | - | - | - |
| Masterbatch 3 | - | - | - | 48 | - | - | - | 48 | - | - |
| Masterbatch 4 | - | - | - | - | - | - | - | - | - | 48 |
| Step 3 | | | | | | | | | | |
| Sulfur | 1.5 | 1.5 | 1.5 | 1.5 | 1.5 | 1.5 | 1.5 | 1.5 | 1.5 | 1.5 |
| Vulcanization accelerator | 0.7 | 0.7 | 0.7 | 0.7 | 0.7 | 0.7 | 0.7 | 0.7 | 0.7 | 0.7 |
| **Evaluation results** | | | | | | | | | | |
| Hardness | 39 | 38 | 40 | 40 | 38 | 39 | 40 | 41 | 38 | 41 |
| Tear strength (N/mm) | 42 | 44 | 50 | 52 | 44 | 47 | 51 | 55 | 44 | 55 |
| Flex crack growth resistance | | | | | | | | | | |
| $\log$ (10,000 times/mm70 %) | 7.4 | 7.5 | 7.5 | 7.5 | 7.5 | 7.7 | 7.7 | 7.8 | 7.7 | 7.9 |
| $\log$ (10,000 times/mm110 %) | 6.7 | 6.6 | 6.9 | 6.8 | 6.8 | 6.8 | 6.9 | 6.9 | 6.6 | 6.8 |
| Durability index | 100 | 101 | 125 | 120 | 112 | 114 | 140 | 135 | 120 | 150 |

* not according to the invention

EP 1 967 544 B1

- continued -

EP 1 967 544 B1

| Kinds of materials | Com. Ex. | | | | | | | | | | |
|---|---|---|---|---|---|---|---|---|---|---|---|
| | 1 | 2 | 3 | 4 | 5 | 6 | 7 | 8 | 9 | 10 | 11 |
| Amounts (part by weight) | | | | | | | | | | | |
| Step 1 | | | | | | | | | | | |
| NR | 40 | 40 | 100 | 100 | 100 | 60 | 60 | 60 | 60 | 60 | 100 |
| ENR | - | - | - | - | - | 40 | 40 | 40 | - | - | - |
| BR | 60 | 60 | - | - | - | - | - | - | - | - | - |
| Carbon black | 50 | - | - | - | - | - | - | - | - | - | - |
| Silica | - | 48 | 48 | 38 | 28 | 38 | 28 | 28 | 28 | 28 | 28 |
| Silane coupling agent | - | 3.84 | 3.84 | 3.04 | 2.24 | 3.04 | 2.24 | 2.24 | 2.24 | 2.24 | 2.24 |
| Silane compound | - | - | - | - | - | - | - | 2.24 | 2.24 | 2.24 | - |
| Plasticizer without containing double bond | - | - | - | - | - | - | - | - | 8 | - | - |
| Double bond-containing plasticizer 1 | - | - | - | - | - | - | - | - | - | - | 8 |
| Double bond-containing plasticizer 2 | - | - | - | - | - | - | - | - | - | - | - |
| Double bond-containing plasticizer 3 | - | - | - | - | - | - | - | - | - | - | - |
| Aromatic oil | 5 | - | - | - | - | - | - | - | - | - | - |
| Petroleum resin | 3 | - | - | - | - | - | - | - | - | - | - |
| Wax | 1.2 | 1.2 | 1.2 | 1.2 | 1.2 | 1.2 | 1.2 | 1.2 | 1.2 | 1.2 | 1.2 |
| Antioxidant | 2.4 | 2.4 | 2.4 | 2.4 | 2.4 | 2.4 | 2.4 | 2.4 | 2.4 | 2.4 | 2.4 |
| Stearic acid | 2.5 | 2.5 | 2.5 | 2.5 | 2.5 | 2.5 | 2.5 | 2.5 | 2.5 | 2.5 | 2.5 |
| Zinc oxide | 3 | 3 | 3 | 3 | 3 | 3 | 3 | 3 | 3 | 3 | 3 |

- continued -

| Kinds of materials | Com. Ex. | | | | | | | | | | |
|---|---|---|---|---|---|---|---|---|---|---|---|
| | 1 | 2 | 3 | 4 | 5 | 6 | 7 | 8 | 9 | 10 | 11 |
| **Amounts (part by weight)** | | | | | | | | | | | |
| Step 2 | | | | | | | | | | | |
| ENR | - | - | - | - | - | - | - | - | 40 | - | - |
| Masterbatch 1 | - | - | - | - | - | - | - | - | - | 48 | - |
| Masterbatch 2 | - | - | - | - | - | - | - | - | - | - | - |
| Masterbatch 3 | - | - | - | - | - | - | - | - | - | - | - |
| Masterbatch 4 | - | - | - | - | - | - | - | - | - | - | - |
| Step 3 | | | | | | | | | | | |
| Sulfur | 1.5 | 1.5 | 1.5 | 1.5 | 1.5 | 1.5 | 1.5 | 1.5 | 1.5 | 1.5 | 1.5 |
| Vulcanization accelerator | 0.7 | 0.7 | 0.7 | 0.7 | 0.7 | 0.7 | 0.7 | 0.7 | 0.7 | 0.7 | 0.7 |
| **Evaluation results** | | | | | | | | | | | |
| Hardness | 52 | 57 | 55 | 50 | 45 | 47 | 42 | 43 | 43 | 42 | 42 |
| Tear strength (N/mm) | 52 | 53 | 50 | 43 | 35 | 50 | 38 | 50 | 39 | 38 | 36 |
| Flex crack growth resistance | | | | | | | | | | | |
| log (10,000 times/mm70 %) | 7 | 7.3 | 6.5 | 6.7 | 7 | 6.9 | 7.3 | 7.2 | 6.7 | 7.1 | 6.7 |
| log (10,000 times/mm110 %) | 6.5 | 6.6 | 4.9 | 5.2 | 5.4 | 6.3 | 6 | 6.4 | 5.9 | 6 | 5.1 |
| Durability index | 170 | 100 | 20 | 23 | 30 | 56 | 60 | 80 | 90 | 96 | 50 |

EP 1 967 544 B1

In Comparative Example 1, a conventional rubber composition prepared using carbon black was used.

In Examples 1, 2, 5, 6 and 9, due to compounding a specific rubber component and a double bond-containing plasticizer derived from resources other than petroleum resources, tear strength, flex crack growth resistance and durability could be improved with favorable balance without increasing hardness.

In Examples 3, 4, 7, 8 and 10, due to adding masterbatches prepared by kneading ENR and a double bond-containing plasticizer derived from resources other than petroleum resources in the step 2, tear strength, flex crack growth resistance and durability could be further improved.

In Comparative Examples 2 to 8, double bond-containing plasticizers derived from resources other than petroleum resources were not compounded, and not only hardness was increased but also tear strength, flex crack growth resistance and durability could not be improved with favorable balance, and as a result, durability was particularly insufficient.

In Comparative Examples 9 and 10, although a plasticizer was compounded, the plasticizer was not a double bond-containing plasticizer derived from resources other than petroleum resources, consequently, tear strength and durability in particular resulted in being insufficient.

In Comparative Example 11, since ENR was not compounded, any of tear strength, flex crack growth resistance and durability could not be improved.

INDUSTRIAL APPLICABILITY

According to the present invention, by compounding specific amounts of a rubber component containing a natural rubber and an epoxidized natural rubber, silica, and a double bond-containing plasticizer derived from resources other than petroleum resources, there can be provided a rubber composition for a sidewall, in which an effect on environments can be taken into consideration, provision for the future decrease in petroleum supply can be satisfied, and further, tear strength and flex crack growth resistance can be improved with favorable balance without increasing hardness, and a process for preparing the rubber composition.

**Claims**

1. A rubber composition for a sidewall, comprising:

    15 to 60 parts by weight of silica, and
    2 to 20 parts by weight of a double bond-containing plasticizer derived from resources other than petroleum resources
    on the basis of 100 parts by weight of a rubber component containing 30 to 80 % by weight of a natural rubber and 20 to 70 % by weight of an epoxidized natural rubber having an epoxidization ratio between 5 % by mol and 60 % by mol, **characterized in that** the rubber composition further comprises
    4 to 16 parts by weight of a silane compound satisfying the following general formula:

$$X_n\text{-}Si\text{-}Y_{4-n}$$

    wherein X is an alkoxy group, Y is a phenyl group or an alkyl group, and n is an integer of 1 to 3 on the basis of 100 parts by weight of silica.

2. The rubber composition for a sidewall of Claim 1, wherein the iodine value of said double bond-containing plasticizer derived from resources other than petroleum resources is not less than 90.

3. A process for preparing the rubber composition for a sidewall of Claim 1 or 2, comprising:

    (1) a step of kneading a natural rubber, silica and a double bond-containing plasticizer derived from resources other than petroleum resources; and,
    (2) a step of kneading the kneaded product discharged in the step (1) and an epoxidized natural rubber.

4. A process for preparing the rubber composition for a sidewall of Claim 1 or 2, comprising,

    (1) a step of preparing a masterbatch by kneading an epoxidized natural rubber and a double bond-containing plasticizer derived from resources other than petroleum resources;
    (2) a step of kneading a natural rubber and silica; and

**EP 1 967 544 B1**

(3) a step of kneading the masterbatch discharged in the step (1) and the kneaded product discharged in the step (2).

**5.** A tire having a sidewall, which comprises the rubber composition for a sidewall of Claim 1 or 2.

**6.** A tire having a sidewall, which comprises a rubber composition for a sidewall obtainable by the preparation process of Claim 3 or 4.

**Patentansprüche**

**1.** Kautschukzusammensetzung für eine Seitenwand, enthaltend:

15 bis 60 Gewichtsteile Silica und
2 bis 20 Gewichtsteile eines Doppelbindung enthaltenden Weichmachers, der aus von Erdölquellen verschiedenen Quellen stammt,
bezogen auf 100 Gewichtsteile einer Kautschukkomponente, welche 30 bis 80 Gew.-% eines Naturkautschuks und 20 bis 70 Gew.-% eines epoxidierten Naturkautschuks mit einem Epoxidierungsverhältnis zwischen 5 Mol-% und 60 Mol-% enthält, **dadurch gekennzeichnet, dass** die Kautschukzusammensetzung des Weiteren enthält:
4 bis 16 Gewichtsteile einer Silanverbindung, welche der nachfolgenden allgemeinen Formel genügt:

$$X_n\text{-Si-}Y_{4-n},$$

worin X eine Alkoxygruppe ist, Y eine Phenylgruppe oder eine Alkylgruppe ist und n eine ganze Zahl zwischen 1 und 3 ist, bezogen auf 100 Gewichtsteile Silica.

**2.** Kautschukzusammensetzung für eine Seitenwand nach Anspruch 1, wobei der Iodwert des Doppelbindung enthaltenden Weichmachers, der aus von Erdölquellen verschiedenen Quellen stammt, nicht weniger als 90 beträgt.

**3.** Verfahren zum Herstellen einer Kautschukzusammensetzung für eine Seitenwand nach Anspruch 1 oder 2 umfassend:

(1) einen Schritt des Knetens eines Naturkautschuks, von Silica und von einem Doppelbindung enthaltenden Weichmacher, der aus von Erdölquellen verschiedenen Quellen stammt, und
(2) einen Schritt des Knetens des gekneteten Produkts, welcher aus dem Schritt (1) stammt, und eines epoxidierten Naturkautschuks.

**4.** Verfahren zum Herstellen einer Kautschukzusammensetzung für eine Seitenwand nach Anspruch 1 oder 2, umfassend:

(1) einen Schritt des Herstellens einer Stammmischung durch Kneten eines epoxidierten Naturkautschuks und eines Doppelbindung enthaltenen Weichmachers, der aus von Erdölquellen verschiedenen Quellen stammt,
(2) einen Schritt des Knetens eines Naturkautschuks und Silica und
(3) einen Schritt des Knetens der in dem Schritt (1) hergestellten Stammmischung und des in dem Schritt (2) hergestellten gekneteten Produkts.

**5.** Reifen mit einer Seitenwand, welche eine Kautschukzusammensetzung für eine Seitenwand nach Anspruch 1 oder 2 enthält.

**6.** Reifen mit einer Seitenwand, welche eine Kautschukzusammensetzung für eine Seitenwand enthält, welche durch ein Herstellungsverfahren nach Anspruch 3 oder 4 erhältlich ist.

**Revendications**

**1.** Composition de caoutchouc pour un flanc de pneu, comprenant :

**12**

de 15 à 60 parties en poids de silice, et
de 2 à 20 parties en poids d'un plastifiant contenant une double-liaison, dérivé de ressources différentes des ressources de pétrole
sur la base de 100 parties en poids d'un constituant de caoutchouc contenant de 30 à 80% en poids d'un caoutchouc naturel et de 20 à 70% en poids d'un caoutchouc naturel époxydé présentant un taux d'époxydation de 5% en mole à 60% en mole, **caractérisée en ce que** la composition de caoutchouc comprend en plus de 4 à 16 parties en poids d'un composé de silane satisfaisant la formule générale suivante :

$$X_n\text{-}Si\text{-}Y_{4-n}$$

dans laquelle X est un groupe alcoxy, Y est un groupe phényle ou un groupe alkyle, et n est un nombre entier de 1 à 3 sur la base de 100 parties en poids de silice.

2. Composition de caoutchouc pour un flanc de pneu selon la revendication 1, dans laquelle l'indice d'iode dudit plastifiant contenant une double-liaison, dérivé de ressources différentes des ressources de pétrole n'est pas inférieur à 90.

3. Procédé de préparation de la composition de caoutchouc pour un flanc de pneu selon la revendication 1 ou 2, comprenant :

   (1) une étape de malaxage d'un caoutchouc naturel, de silice et d'un plastifiant contenant une double-liaison, dérivé de ressources différentes des ressources de pétrole ; et,
   (2) une étape de malaxage du produit malaxé évacué dans l'étape (1) et d'un caoutchouc naturel époxydé.

4. Procédé de préparation de la composition de caoutchouc pour un flanc de pneu selon la revendication 1 ou 2, comprenant,

   (1) une étape de préparation d'un lot-mère par malaxage d'un caoutchouc naturel époxydé et d'un plastifiant contenant une double-liaison, dérivé de ressources différentes des ressources de pétrole ;
   (2) une étape de malaxage d'un caoutchouc naturel et de silice ; et,
   (3) une étape de malaxage du lot-mère évacué dans l'étape (1) et du produit malaxé évacué dans l'étape (2).

5. Pneu présentant un flanc, lequel comprend la composition de caoutchouc pour un flanc de pneu selon la revendication 1 ou 2.

6. Pneu présentant un flanc, lequel comprend une composition de caoutchouc pour un flanc de pneu pouvant être obtenue par le procédé de préparation selon la revendication 3 ou 4.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003063206 A

- EP 1577341 A1